(19) Europäisches Patentamt / European Patent Office / Office européen des brevets

(11) **EP 3 053 041 B1**

(12) **EUROPEAN PATENT SPECIFICATION**

(45) Date of publication and mention of the grant of the patent:
**06.03.2019 Bulletin 2019/10**

(21) Application number: **13784026.0**

(22) Date of filing: **03.10.2013**

(51) Int Cl.:
**G06F 11/34** *(2006.01)*

(86) International application number:
**PCT/SE2013/051163**

(87) International publication number:
**WO 2015/050488 (09.04.2015 Gazette 2015/14)**

(54) **METHOD, SYSTEM, COMPUTER PROGRAM AND COMPUTER PROGRAM PRODUCT FOR MONITORING DATA PACKET FLOWS BETWEEN VIRTUAL MACHINES, VMS, WITHIN A DATA CENTRE**

VERFAHREN, SYSTEM, COMPUTERPROGRAMM UND COMPUTERPROGRAMMPRODUKT ZUR ÜBERWACHUNG VON DATENPAKETSTRÖMEN ZWISCHEN VIRTUELLEN MASCHINEN, VMS, IN EINER DATENZENTRALE

PROCÉDÉ, SYSTÈME, PROGRAMME INFORMATIQUE ET PRODUIT-PROGRAMME INFORMATIQUE PERMETTANT DE SURVEILLER DES FLUX DE PAQUETS DE DONNÉES ENTRE DES MACHINES VIRTUELLES (VM) DANS UN CENTRE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.08.2016 Bulletin 2016/32**

(73) Proprietor: **Telefonaktiebolaget LM Ericsson (publ)**
**164 83 Stockholm (SE)**

(72) Inventors:
• **SEFIDCON, Azimeh**
  **S-191 48 Sollentuna (SE)**
• **YADHAV, Vinay**
  **S-194 32 Upplands Väsby (SE)**

(74) Representative: **Ericsson**
**Patent Development**
**Torshamnsgatan 21-23**
**164 80 Stockholm (SE)**

(56) References cited:
• **TSO FUNG PO ET AL: "Implementing Scalable, Network-Aware Virtual Machine Migration for Cloud Data Centers", 2013 IEEE SIXTH INTERNATIONAL CONFERENCE ON CLOUD COMPUTING, IEEE, 28 June 2013 (2013-06-28), pages 557-564, XP032525411, DOI: 10.1109/CLOUD.2013.82 [retrieved on 2013-11-26]**
• **VIVEK SHRIVASTAVA ET AL: "Application-aware virtual machine migration in data centers", INFOCOM, 2011 PROCEEDINGS IEEE, IEEE, 10 April 2011 (2011-04-10), pages 66-70, XP031953632, DOI: 10.1109/INFCOM.2011.5935247 ISBN: 978-1-4244-9919-9**
• **XIAOQIAO MENG ET AL: "Improving the Scalability of Data Center Networks with Traffic-aware Virtual Machine Placement", INFOCOM, 2010 PROCEEDINGS IEEE, IEEE, PISCATAWAY, NJ, USA, 14 March 2010 (2010-03-14), pages 1-9, XP031674817, ISBN: 978-1-4244-5836-3**

**Description**

TECHNICAL FIELD

The present disclosure relates to cloud computing and cloud networks, especially methods, systems, computer program and computer program product for monitoring data packet flows between Virtual Machines, VMs, within a data centre.

BACKGROUND

In cloud networks, virtual machines are software implemented abstraction of the underlying hardware. A virtual machine (VM) is a software implementation of a machine (i.e. a computer) that executes programs like a physical machine.

The hardware, or physical resources, of nodes in a telecommunications network may be implemented as virtual machines.

Cloud based telecommunications are voice and data communications where telecommunication applications, e.g. switching and storage, are hosted by virtual machines.

Cloud communications providers deliver voice & data communications applications and services, hosting them on servers that the providers own and maintain, giving their customers access to the "cloud." Cloud services are a broad term, referring primarily to data-centre-hosted services that are run and accessed over e.g. Internet infrastructure.

Placement of VMs in datacenters has been an area of study for some time now. Schedulers in cloud platforms, which determine where a VM needs to be launched, handle placement of VM. Most schedulers run basic algorithms to determine the placement of VMs. Random placement, First Available server, Round Robin are some examples of simple schedulers. Some schedulers employ more complex VM placement algorithm to achieve performance requirement in the datacenter such as low power utility or equal load distribution. How VMs are scheduled determine how efficiently physical resources in a data center are used. Efficient use of datacenter's physical resources results in lowering the operational costs.

In data centers, scheduling deals with the placement of VMs over the physical infrastructure. In current cloud platform schedulers, the parameters considered for making the placement decision are availability of processing and memory resources and they aim at optimizing the usage of physical servers in the infrastructure in order to save power.

Application awareness, flow awareness and scalability in data networks and virtual machine migration in cloud data centers are issues that have to be dealt with in the field of cloud computing. Different aspect of said issues are discussed in following articles:

Tso Fung Po et al: "Implementing Scalable, Network-Aware Vitual Machine Migration for Cloud Data Centers", 2013 IEEE SIXTH INTERNATIONAL CONFERENCE ON CLOUD COMPUTING, IEEE, 28 June 2013 (2013-06-28), pages 557-564, XP032525411, DOI:10.1109/CLOUD.2013.82;
Vivek Shrivastava et al: "Application-aware virtual machine migration in data centers", INFOCOM, 2011 PROCEEDINGS IEEE, IEEE, 10 April 2011 (2011-04-10), pages 66 - 70, XP031953632, DOI: 10.1109/INFCOM.2011.5935247, ISBN: 978-1-4244-9919-9;
Xiaoqiao Meng et al: "Improving the scalability of data center networks with traffic-aware virtual machine placement", 14 March 2010 (2010-03-14), pages 1-9, XP031674817, ISBN: 978-1-4244-5836-3

Network usages of VMs are often not considered while making scheduling decisions. Whenever VMs deployed inside the cloud platforms are communicating with each other, the available bandwidth and latency between are not considered while placing the VMs.

SUMMARY

One object of the following disclosure is to provide a solution of the problem of inefficient network traffic flows between VMs inside a data center. Inefficient network flows between the VMs can lead to network traffic flowing inside the data center occupying resources on physical network resources like switches and routers and also leads to increased latency between the communicating VMs.

This and other objects are met by a method, system, computer program and computer program product as stated in the accompanying independent claims.

Different embodiments of the invention are presented in the dependent claims.

One advantage achieved by taking the networking traffic flow pattern into consideration between the VMs inside a data center while scheduling a VM is that it can lead to optimal utilization of physical network resources such as switches and routers inside the cloud platform and reduce network latency.

BRIEF DESCRIPTION OF THE DRAWINGS

The foregoing, and other, objects, features and advantages of the present invention will be more readily understood upon reading the following detailed description in conjunction with the drawings in which:

Figure 1    is a block diagram illustrating a datacentre according to prior art;

Figure 2    is a block diagram illustrating a modified data centre comprising a flow monitoring system;

Figure 3    is a block diagram illustrating a flow monitoring system according to one aspect of the present invention;

Figure 4    is a flowchart illustrating a method according to one aspect of the present invention;

Figure 5    is a flowchart illustrating an embodiment of the method according to one aspect of the present invention;

Figure 6    is a block diagram illustrating a physical resource section of a data centre;

Figure 7    is a block diagram illustrating the physical resource section (as in figure 6 indicating optional VM locations;

Figure 8    is a block diagram illustrating a flow monitoring system according to further one aspect of the present invention.

DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention with unnecessary detail.

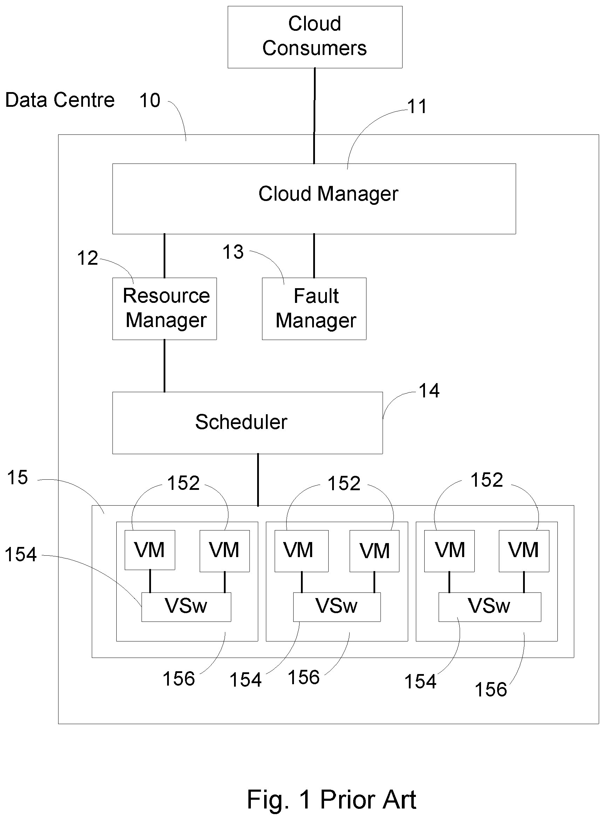

Figure 1 is an illustration of a data centre according to prior art.

The datacentre 10 comprises a cloud manager 11, a resource manager 12, a fault manager 13, a scheduler 14 and physical resource layer 15. Virtual Machines (VM) 152 and Virtual Switches (Vsw) 154 are executed in this layer, which includes hardware resources, such as computers (CPU and memory), networks (routers, firewalls, switches, network links and interfaces), storage components (hard disks) and other physical computing infrastructure elements.

A three-layered model may be used for illustrating the cloud infrastructure of a telecommunications network: service layer, a resource abstraction and control layer, and physical resource layer. The data-centre-hosted application service software belongs to the service layer. A Cloud provider defines interfaces for Cloud Consumers to access telecommunication services. Further, a resource abstraction and control layer is defined, which layer involves the system components to provide and manage access to the physical computing resources through software abstraction. Examples of resource abstraction components include software elements such as hypervisor, virtual machines, virtual data storage, and other computing resource abstractions. The resource abstraction needs to ensure efficient, secure, and reliable usage of the underlying physical resources. While virtual machine technology is commonly used at this layer, other means of providing the necessary software abstractions are also possible. The control aspect of this layer refers to the software components that are responsible for resource allocation, access control, and usage monitoring. This is the software that ties together the numerous underlying physical resources and their software abstractions to enable resource pooling, dynamic allocation, and measured services.

The physical resource layer 15 involves all the physical computing resources. This layer includes hardware resources, such as computers (CPU and memory), networks (routers, firewalls, switches, network links and interfaces), storage components (hard disks) and other physical computing infrastructure elements. The resource abstraction and control layer exposes virtual cloud resources on top of the physical resource layer and supports the service layer where cloud services interfaces are exposed to Cloud Consumers which do not have direct access to the physical resources.

A service application in a cloud infrastructure is a software application dynamically allocated as a VM over the available physical resources, e.g. computing Central Processing Unit hardware resources (CPU HW), network resources (NW) and disk server resources (disk). Said VM can be quickly created, cloned, destroyed and can live migrated also on physically remote infrastructure along with the related data.

A cloud infrastructure may comprise one or more virtual data centres 10 for hosting software applications providing application services.

The cloud manager (system) 11 has a main role to provide cloud services to external entities, monitor Service Level Agreement (SLA), realize the billing platform, etc. The cloud manager 11 is also configured to manage and control several hypervisor arrangements and the resource management system 12 mechanism by means of the scheduler 14 which helps to coordinate IT resources, i.e. physical resources 15, in response to management actions performed by both cloud consumers and cloud providers.

Tasks that are typically automated and implemented through the resource manager scheduler 14 involve:

  ▪ managing virtual IT resource templates that are used for creating pre-built instances, such as virtual machine;
  ▪ allocating and releasing virtual IT resources into the available physical infrastructure in response to the starting, pausing, resuming, and termination of virtual IT resource, VMs, instances;
  ▪ coordinating IT resources in relation to the involvement of other mechanisms, such as resource replication, load balancer, and fault manager system 13;
  ▪ enforcing usage and security policies throughout the lifecycle of cloud service instances;
  ▪ monitoring operational conditions of IT resources;

Cloud providers usually deploy resource management systems as part of VM platforms.

The resource manager, or resource management system, 12 functions can be accessed by cloud resource administrators employed by the cloud provider or cloud consumer. Those working on behalf of a cloud provider will often be able to directly access the resource management system's native console.

Resource management system 12 typically expose Application Programming Interfaces, APIs, that allow cloud providers to build remote administration system portals that can be customized to selectively offer resource management controls to external cloud resource administrators acting on behalf of cloud consumer organizations.

The fault manager 13 is a block for handling faults and failovers within the data centre.

In order to achieve the object set out in the summary, a modification of a data centre 10 is suggested and described hereafter. Said modified data centre 100 supports a method and embodiments thereof for achieving the object set out.

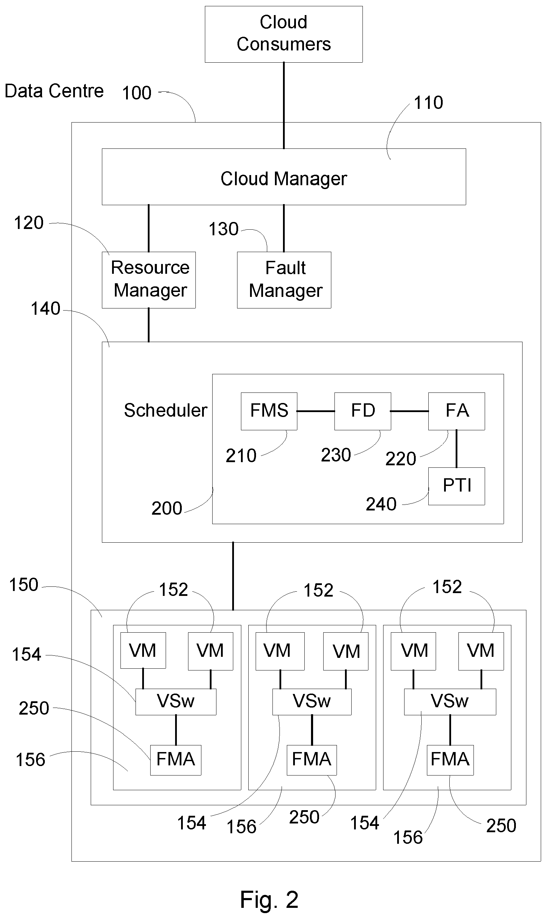

An embodiment of a data centre 100 is illustrated in figure 2. Said modified data centre 100 differs from the prior art data centre 10, see figure 1, in a number of details which is described hereafter.

The modified data centre 100 comprises a cloud manager 110, a resource manager 120, a fault manager 130, a scheduler system 140 and physical resource layer 150. Virtual Machines (VM) 160 and Virtual Switches (Vsw) 170 are executed in the physical resource layer 150, which includes hardware resources, such as computers (CPU and memory), networks (routers, firewalls, switches, network links and interfaces), storage components (hard disks) and other physical computing infrastructure elements.

The scheduler system 140 comprises a scheduler 14, and its components, and a flow monitoring system 200.

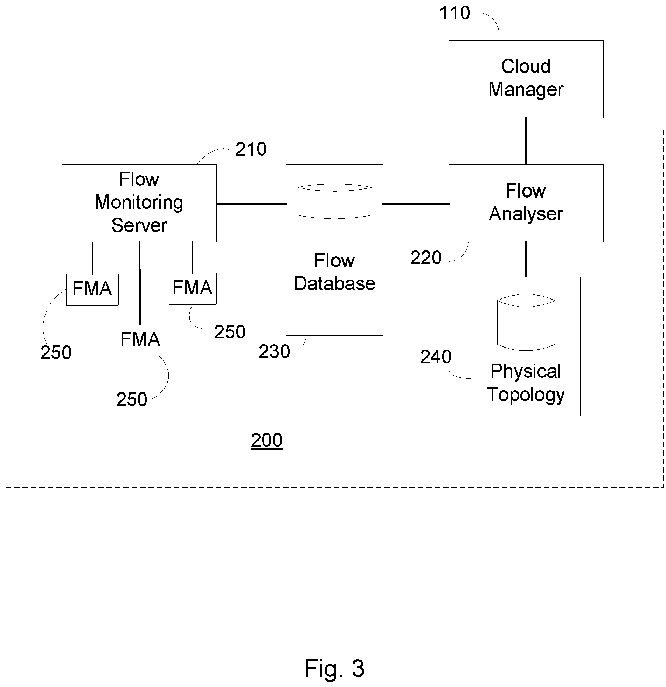

Figure 3 is a block diagram illustrating an embodiment of a scheduler system 140 which comprises a Flow Monitoring Server 210, a Flow Analyser 220, a Flow Database 230, a Physical Topology (Information/Database) 240, and one or more Flow Monitoring Agents 250.

The Flow Monitoring Server, FMS, 210 monitors data packet flows between Virtual Machines, VMs, 152 (see figure 2) within the physical resource layer 150 by collecting flow data for data packet flows between VMs in the data centre. The FMS 210 collects flow data information from all the virtual switches to which a VM 152 are connected. The design of this component is based on agent-server model. Flow Monitoring Agents, FMAs, 250 are deployed on all the physical machines 156, and the FMAs collect the network traffic information, i.e. flow data, from the virtual switches 154 and update the monitoring server 210. The flow data collected is the bandwidth usage statistics based on pairs of source and destination IP addresses. The statistical data collected by the FMAs 250 are sent to the FMS 210 periodically. The FMS maintains a Flow Database, FD, 230 of all the flows. The FMS 210 updates the FD 230 as and when new statistics are sent to the FMS by the FMA 250. The flow data collected by the FMS 210 can be used by any other service for various purposes.

A flow analyser, FA, 220 is configured to map traffic data of data packet flows between VMs onto data centre topology to establish flow costs for said data packet flows. Said FA further calculates an aggregated flow cost for all the flows associated with a VM for each VM within the data centre, and the FA 220 determines whether to reschedule any VM, or not, based on the aggregated flow cost.

The FA 220 is a system that uses the Flow Database 230 updated by the FMS 210 to determine flows that are consuming significant bandwidth on the physical network resources. The FA is aware of the physical topology of the data centre 100 by means of Physical Topology information 240, i.e. information about the physical resources and the VMs in the physical resource layer 150. The FA accesses the flow database to examine traffic flows that are consuming high bandwidth, and maps the flows on the physical resources 150 to determine expensive flows in the data centre.

Thus, the FA obtains information on the location of the VMs associated in the flow being considered, and the FA maps the data packet flows over a VM to determine the physical network resources being used by the flow and assigns the flow a cost.

Cost determined by the FA system 220 may be a function of network distance, e.g. number of switches, covered by a flow in the data centre and the bandwidth of the flow. Once an expensive flow is identified, all other flows associated with the two VMs that belong to the flow are also analysed to determine a revisited placement for the VM(s) so that new aggregated cost of all the flows from the VMs are lower than the current aggregated cost of flows. Thus, the FA is configured to calculate an aggregated flow cost per VM for all the flows within the data centre.

According to one embodiment, if the cost of flow being considered is higher than a predefined threshold, the FA 220 obtains all the other flows originating or terminating with the VMs in and calculated the cost for all the flows. A new placement for VMs is determined in order to reduce the aggregated cost of all the flows for the VMs.

If the FA 220 takes a decision to migrate one VM to another physical machine 156, than the FA executes the decision and migrates the VM in question to another physical resource 156. The FA 220 interfaces with the cloud manager 110 via the scheduler system 140 and the FA notifies the Cloud manager 110 by sending a message that the migration of the identified VM. The FA has than reduced the cost of flow between the VMs.

The FA may be designed to be plug-in based so that it can be deployed with various cloud platforms.

The modified scheduler 140 implements a RESTFul client that sends VM migration notifications towards the cloud manager 110.

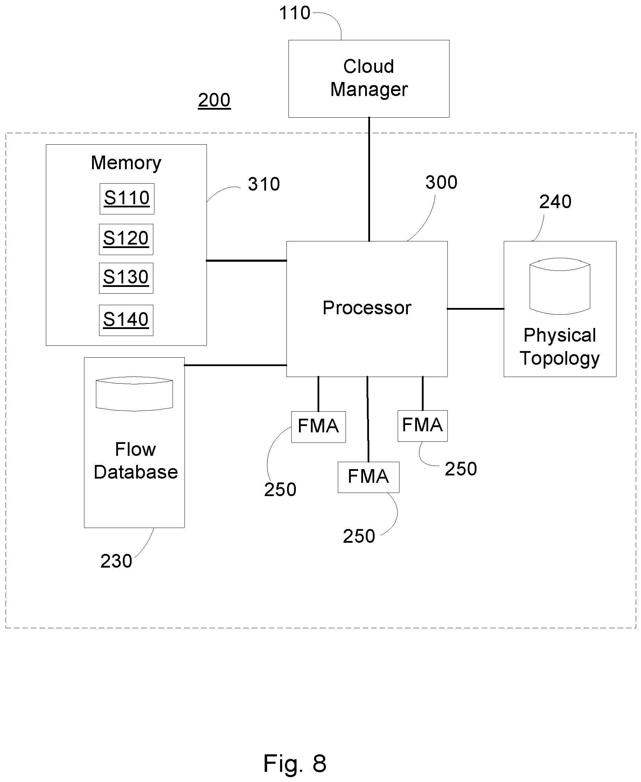

A flow monitoring system according to further one aspect of the present invention is illustrated in figure 8 and described further down in this disclosure.

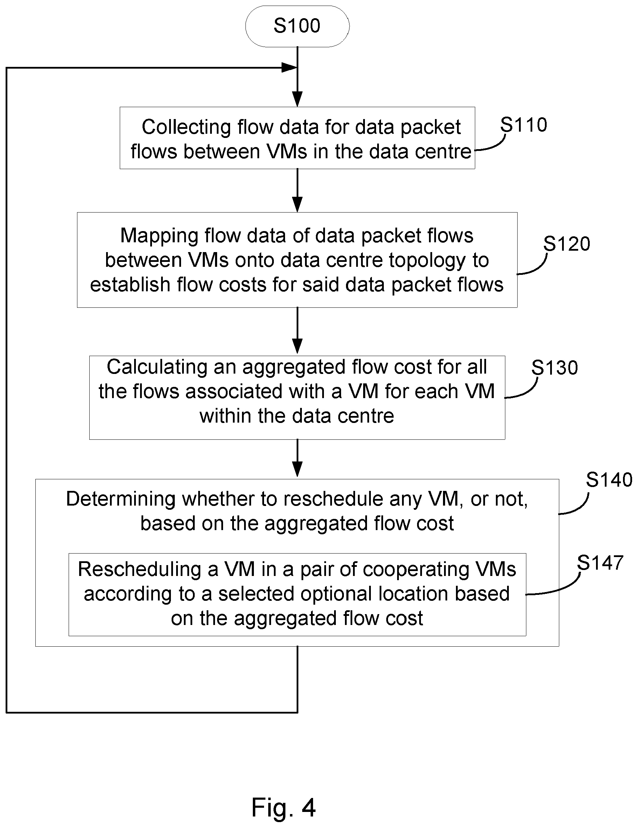

Figure 4 illustrates a flowchart according to one embodiment of the method for achieving the desired object.

The method S100 is designed for monitoring data packet flows between VMs 152 in a data centre 100. The method comprises:

> **S110: - Collecting flow data for data packet flows between VMs in the data centre.** The Flow Monitoring Server, FMS, 210 monitors data packet flows between Virtual Machines, VMs, 152 within the physical resource layer 150 by collecting flow data for data packet flows between VMs in the data centre. Said flow data is collected by the FMS 210 and stored in the Flow Database 230.
>
> **S120: - Mapping flow data of data packet flows between VMs onto data centre topology to establish flow costs for said data packet flows.** The FA 220 obtains information on the location of the VMs associated in the flow being considered, and the FA 220 maps the data packet flows over a VM to determine the physical network resources being used by the flow and assigns the flow a cost. Said flow data is stored in the Flow Database 230 from which the flow analyser 220 is adapted to retrieve the flow data, in S120.
>
> The flow cost may be defined as a function of network distance (number of switches used to carry the flow) and bandwidth. A simple definition of the cost can be as describe below:

$$C_{fln} = N_s \text{ x } B_{fln} \text{ ,}$$

> wherein

> > $C_{fln}$ is Flow cost for flow n between two VMs, where n= 1, 2, ..., N, if the VM is cooperating with N different VMs;
> > $N_s$ = No. of switches between two VMs;
> > $B_{fln}$ = flow bandwidth in Mbps for flow n between two VMs.
>
> **S130: - Calculating an aggregated flow cost for all the flows associated with a VM for each VM within the data** centre. The aggregated flow cost associated with a VM is $AC_{fl} = \Sigma C_{fln}$ , where n= 1, 2, ..., N, if the VM is cooperating with N different VMs. The FA is configured to calculate aggregated flow costs.
>
> Once an expensive flow is identified by means of a threshold measure, all other flows associated with the two VMs that belong to the flow are also analysed to determine a revisited placement for the VM(s) so that new aggregated cost of all the flows from the VMs are lower than the current aggregated cost of flows.

> **S140: - Determining whether to reschedule any VM, or not, based on the aggregated flow cost.** If the cost of a flow associated with a VM being considered is higher than a predefined threshold, the FA 220 obtains all the other flows originating or terminating with the VM, and calculates the cost for all the flows. A new placement for the considered VM, also denoted as VM in question, is determined in order to reduce the aggregated cost of all the flows for the VMs.

According to the illustrated embodiment, the determining whether to reschedule, or not, comprises:

> **S147: - Rescheduling a VM in a pair of cooperating VMs according to a selected optional location based on the aggregated flow cost. If the** FA 220 takes a decision to migrate one VM to another physical machine 156, than the FA executes the decision and migrates the VM in question to another physical resource 156. The FA 220 interfaces with the cloud manager 110 via the scheduler 140 and the FA notifies the Cloud manager 110 by sending a message that the migration of the identified VM. The FA has than reduced the cost of flow between the VMs.

According to one embodiment of the method, the collecting of flow data, S110, comprises:

> **S115: - Collecting flow statistics from one or more virtual switches regarding data packet flows handled by the one or more virtual switches.** The FMS 210 collects flow data information from all the virtual switches to which a VM 152 are connected. The FMAs 250 are deployed on all the physical machines 156, and the FMAs collect the network traffic information, i.e. flow data, from the virtual switches 154 and update the monitoring server 210.

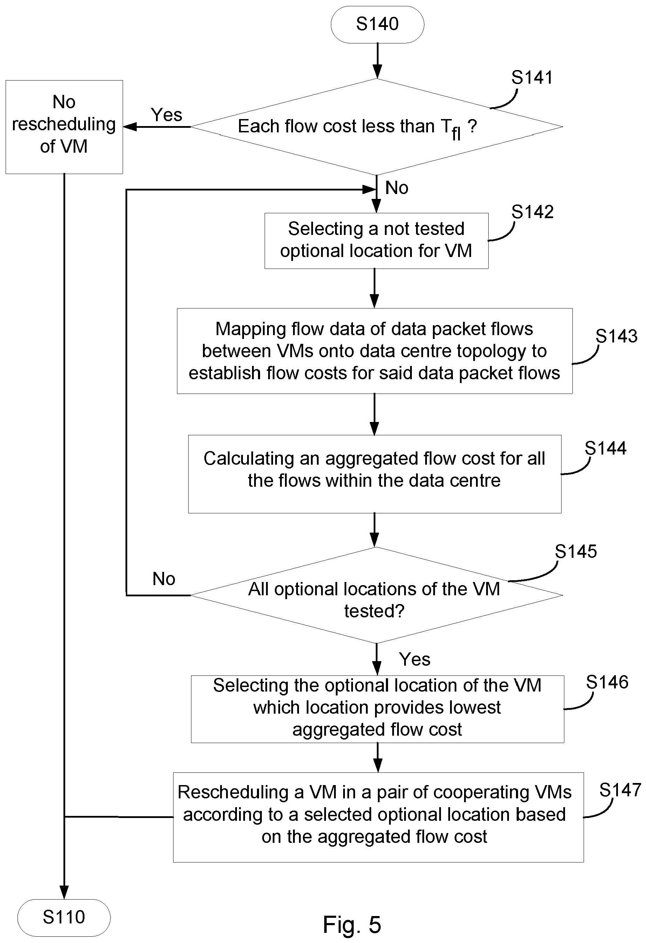

Figure 5 is a flowchart illustrating an embodiment of the method. The embodiment comprises an alternative implementation of step S140, which now will be described in more detail.

The step **S140** starts with a test:

> **S141: - Each flow cost less than $T_{fl}$?** A flow cost threshold $T_{fl}$ is set to a predetermined measure, or value. If the condition is fulfilled, each flow cost from the VM in question cost less than the set measure value, than the method continues with step S110, as the VM in question does not need to be rescheduled.
>
> **S142: - Selecting a not tested optional location for VM.** The impact on the flows in the data centre is tested if the VM in question would be situated in an optional location. This step is performed for each optional location in the data centre. An optional location of a VM is a physical machine 156, e.g. a server, where the VM is not located for the moment, but to which it could be located, i.e. is a possible location for the VM.

**S143:** - **Mapping flow data of data packet flows between VMs onto data centre topology to establish flow costs for said data packet flows.** The cost $C_{fln}$ is defined as a function of network distance (number of switches used to carry the flow) and bandwidth. A simple definition of the cost can be as describe below:

$$C_{fln} = N_s \times B_{fln} \,,$$

wherein

$C_{fln}$ is Flow cost for flow n between two VMs, where n= 1, 2, ..., N, if the VM is cooperating with N different VMs;
$N_s$ = Number of switches between two VMs;
$B_{fln}$ = flow bandwidth in Mbps for flow n between two VMs.
Thus, in this way a flow cost is established for each optional location.

**S144:** - **Calculating an aggregated flow cost for all the flows associated with the VM within the data centre.** The aggregated flow cost associated with the VM is $AC_{fl} = \Sigma\, C_{fln}$, where n= 1, 2, ..., N, if the VM is cooperating with N different VMs.

When the flow costs for all flows associated with the VM and the aggregated flow cost for the VM in the optional location has been calculated, the method performs a test:

**S145:** - **All optional locations of the VM tested?** If not all possible locations have been tested, the condition is "No", the method repeats the loop comprising steps S142, S143, S144 and S145.

If all optional locations of the VM have been tested, the condition is "yes", and the method continues with:

**S146:** - **Selecting the optional location of the VM which location provides the lowest aggregated flow cost.** The best aggregated flow cost is preferably the lowest aggregated flow cost of all the flow costs obtained by testing all optional locations (in the loop comprising steps S142, S143, S144 and S145) for the VM in question. However, other criteria may also be used.

**S147:** - **Rescheduling a VM in a pair of cooperating VMs according to a selected optional location based on the aggregated flow cost.** The flow analyser 220 is adapted to reschedule the VM in question to the optional location providing the best aggregated flow cost. When the VM has been moved by rescheduling from its previous position to the new selected position, a notification message may be sent from the flow analyser 220 of the scheduler system 140 to the cloud manager 110. The notification message contains information that the VM in question have been rescheduled to a new location, i.e. a new physical machine.

When S147 has been executed, the method returns to S110 for performing a new monitoring of data packet flows between Virtual Machines, VMs, preferably for another VM within the data centre.

In the following, an example is presented of how a Flow Analyser may perform Flow cost assignment and determination of new placement for a VM.

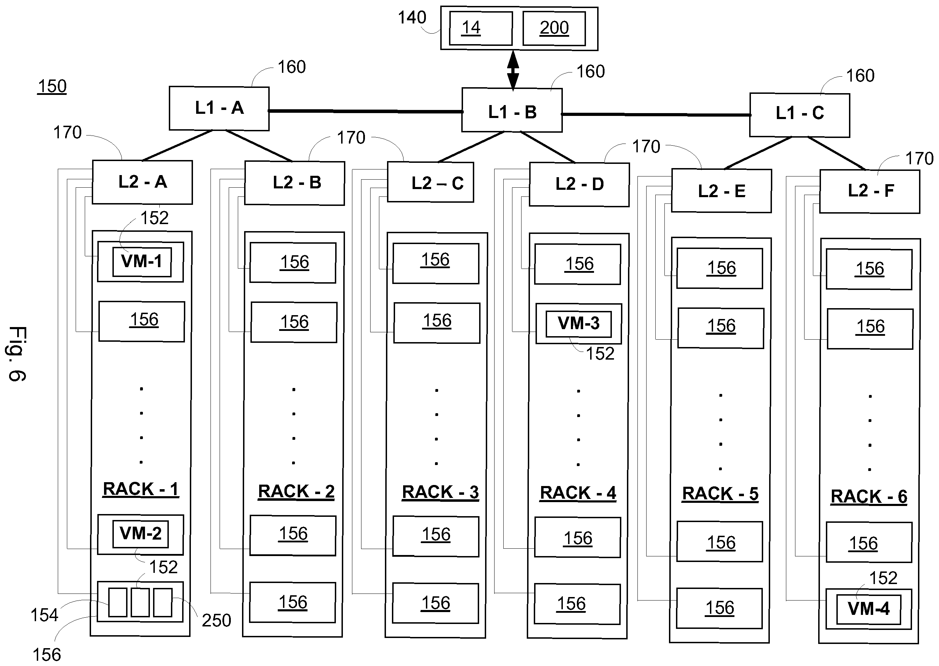

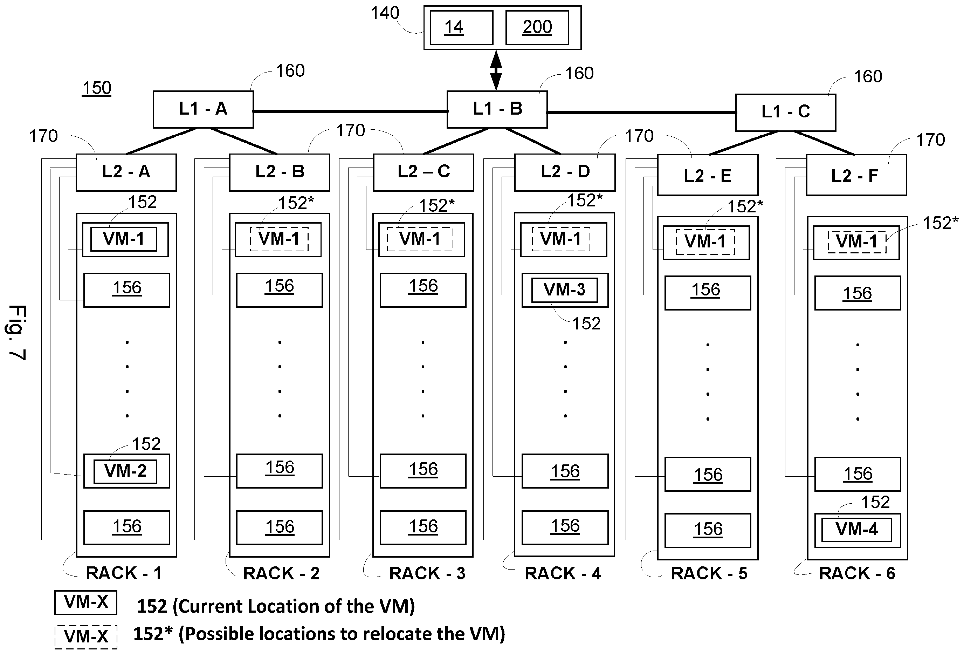

Consider the example of a physical resource 150 of a data centre 100 as shown in the block diagrams of figure 6 and figure 7. The physical resource layer 150 comprises two tier switches 160, 170 and six server racks. The switches 160, 170 provide connectivity between the six server racks RACK-1, RACK-2, RACK-3, RACK-4, RACK-5, and RACK-6. A first tier of switches 160 comprises switches L1-A, L1-B, and L1-C and a second tier of switches 170 comprises of switches L2-A, L2-B, L2-C, L2-D, L2-E, and L2-F.

At least one of the switches 160 in the first tier provides physical connection via a data bus to the scheduler system 140 comprising the flow monitoring system 200.

Each rack comprises one or more physical machines 156 for hosting one or more virtual machines 152. The physical machines 156 is implemented as servers, i.e. program software run on hardware digital processing units. Each server or physical resource 156 comprises a virtual switch 154 and a Flow Monitoring Agent, FMA, 250. The scheduler system 140, flow monitoring system 200, FMA 250, VMs 152, virtual switches 154, and physical machines 156 has already been described with reference to figures 2 and 3.

In the following example, four virtual machines VM-1, VM-2, VM-3 and VM-4 placed inside the data centre are involved as shown in the figure 5.

Consider the following network bandwidth usage by flows (3 flows) associated with VM1:

Flow fl1: VM1-VM2: 10 Mbps
Flow fl2: VM1-VM3: 20 Mbps
Flow fl3: VM1-VM4: 20 Mbps

Said flow data is collected in S110 by the FMS 210 and stored in the Flow Database 230 from which the flow analyser 220 is adapted to retrieve the flow data, in S120. The network traffic associated with Flow 1 is carried by switch L2-A, i.e. via one switch .

The network traffic associated with Flow 2 is carried by switches L2-A, L1-A, L1-B, L2-D i.e. via four switches.

The network traffic associated with Flow 3 is carried by switches L2-A, L1-B, L1-A, L1-B, L1-C, L2-F, i.e. over five switches.

Determining Flow Cost Assignment:

The cost is defined as a function of network distance (number of switches used to carry the flow) and bandwidth. A simple definition of the cost can be as describe below:

$$C_{fln} = N_s \times B_{fln} \text{ ,}$$

wherein

$C_{fln}$ is Flow cost for flow n between two VMs;
$N_s$ = Number of switches between two VMs;
$B_{fln}$ = flow bandwidth in Mbps for flow n between two VMs.

So the cost associated with the three flows would be:

Flow Cost fl1: $C_{fl1}$ = 10 (1 x 10)

Flow Cost fl2: $C_{fl2}$ = 80 (4 x 20)

Flow Cost fl3: $C_{fl3}$ = 100 (5 x 20)

It is assumed that any flow with cost more than 85 Mbps will be considered by the flow analyser to be an expensive flow. A flow cost threshold $T_{fl}$ is set to the measure, or value, 85 Mbps. Flow fl3 will be considered for revised placement of the VM associated with the flow, e.g. in this case VM-1.

In S130, an aggregated flow cost for all the flows associated with a VM within the data centre is calculated by the FA 220.

Aggregated flow cost $AC_{fl}$ associated with VM-1 is given below: Aggregated Flow cost associated with VM1 is $AC_{fl} = \Sigma C_{fln}$ [n= 1, 2, ...] = 10+80+100 = 190. This aggregated flow cost based on a VM where it is originally located by the scheduler may be denoted as the original aggregated flow cost and indicated as $AC_{fl0}$.

In the following, with reference to figure 7 a Flow Cost minimization and VM relocation is described. The current location of a VM as in figure 6 is indicated in a block module 152 having a full line, while a possible, optional location to relocate a VM is indicated in a block module 152* having dashed line.

In S140, it is determined whether to reschedule any VM, or not, based on the aggregated flow cost. Flow fl3 is identified as a costly flow in S141 and VM-1 associated with it will be considered for revised placement in the example in figure 7. If a flow cost is identified as costly, the associated aggregated flow cost is most likely possible to reduce by migrate the VM to another physical machine and/or physical resource.

Consider the view of the data centre as in figure 7, here the possible options for relocation of VM-1 are shown in dashed boxes. There are 5 possible racks namely RACK-2, RACK-3, RACK-4, RACK-5, and RACK-6 where VM-1 can be relocated.

The Relocation option and impact on aggregated cost for different location options of VM1 is determined as follows.

a) Relocation Option1: Perform S142 by selecting a not tested optional location for VM. Here VM-1 is migrated from RACK-1 to RACK-2. In S143, flow data of data packet flows between VMs are mapped onto data centre topology to establish flow costs for said data packet flows, which results as follows:

Flow Cost fl1 (VM1-VM2): $C_{fl1}$ = 30 (3 x 10)

Flow Cost fl2 (VM1-VM3): $C_{fl2}$ = 80 (4 x 20)

Flow Cost fl3 (VM1-VM4): $C_{fl3}$ = 100 (5 x 20)

In S144, an aggregated flow cost for all the flows associated with the VM within the data centre is calculated. The aggregated cost associated with VM-1 $AC_{fl}$ = 210 > 190, wherein 190 is the original aggregated cost $AC_{fl0}$.

In this relocation option there is no change in the cost of Flow fl3 which was supposed to be reduced below the threshold of 85. The aggregated cost associated with VM-1 in the possible location has also increased in comparison to the original aggregated flow cost $AC_{fl0}$. This option is therefore not considered as a placement of interest for VM-1.

In S145, all optional locations of the VM is tested. If not all possible locations have been tested, the condition is "No", the method repeats the loop comprising steps S142, S143, S144 and S145.

b) Relocation Option2: migrate VM-1 from RACK-1 to RACK-3

Flow Cost fl1 (VM1-VM2): $C_{fl1}$ = 40 (4 x 10)

Flow Cost fl2 (VM1-VM3): $C_{fl2}$ = 60 (3 x 20)

Flow Cost fl3 (VM1-VM4): $C_{fl3}$ = 80 (4 x 10)

Aggregated cost associated with VM-1 $AC_{fl}$ = 180 < 190 (=$AC_{fl0}$).

In this relocation option the Flow cost of Flow fl3 has been reduced below the threshold of 85 and the aggregate flow cost has also been reduced to 180 (as compared to 190 in the original placement). Hence this relocation option can be considered as a potential option.

c) Relocation Option3: migrate VM-1 from RACK-1 to RACK-4

Flow Cost fl1 (VM1-VM2): $C_{fl1}$ = 40 (4 x 10)

Flow Cost fl2 (VM1-VM3): $C_{fl2}$ = 20 (1 x 20)

Flow Cost fl3 (VM1-VM4): $C_{fl3}$ = 80 (4 x 20)

Aggregated cost associated with VM-1 $AC_{fl}$ = 140 < 190 (=$AC_{fl0}$).

In this relocation option the Flow cost of Flow fl3 has been reduced below the threshold of 85 and the aggregate flow cost has also been reduced to 140 as compared to 190 in the original placemen). Hence this relocation option can be considered as a potential option.

d) Relocation Option4: migrate VM-1 from RACK-1 to RACK-5

Flow Cost fl1 (VM1-VM2): $C_{fl1}$ = 50 (5 x 10)

Flow Cost fl2 (VM1-VM3): $C_{fl2}$ = 80 (4 x 20)

Flow Cost fl3 (VM1-VM4): $C_{fl3}$ = 60 (3 x 20)

Aggregated cost associated with VM-1 $AC_{fl}$ = 190 (=$AC_{fl0}$).

In this relocation option the Flow cost of Flow fl3 has been reduced below the threshold of 85 but the aggregate flow cost associated with VM-1 has remained the same as the original aggregated cost. Hence this relocation option will not be optimal as it does not alter the original aggregate cost.

e) Relocation Option5: migrate VM-1 from RACK-1 to RACK-6

Flow Cost fl1 (VM1-VM2): $C_{fl1}$ = 50 (5 x 10)

Flow Cost fl2 (VM1-VM3): $C_{fl2}$ = 80 (4 x 20)

Flow Cost fl3 (VM1-VM4): $C_{fl3}$ = 20 (1 x 20)

Aggregated cost associated with VM-1 $AC_{fl}$ = 150 < 190 (=$AC_{fl0}$).

In this relocation option the Flow cost of Flow fl3 has been reduced below the threshold of 85 and the aggregate flow cost has also been reduced to 150 (as compared to 190 in the original placement). Hence this relocation option can be considered as a potential option.

In S146, the optional location of the VM which location provides the lowest aggregated flow cost is selected. The best aggregated flow cost is preferably the lowest aggregated flow cost of all the flow costs obtained by testing all optional locations (in the loop comprising steps S142, S143, S144 and S145) for the VM in question. However, other criteria may also be used.

Out of the 5 relocation options 3 options (Option2, Option3 and Option5) remain that minimize the High flow (Flow3) cost as well as reduces the aggregate cost of the VM associated (VM-1).

Out of the three potential options, option3 has the lowest aggregated cost.

As option3 is selected, the rescheduling step wherein a VM in a pair of cooperating VMs according to a selected optional location based on the aggregated flow cost takes place, S147. The flow analyser 220 is adapted to reschedule the VM in question to the optional location providing the best aggregated flow cost. When the VM has been moved by rescheduling from its previous position to the new selected position, a notification message may be sent from the flow analyser 220 of the scheduler system 140 to the cloud manager 110. The notification message contains information that the VM in question have been rescheduled to a new location, i.e. a new physical machine.

Option3 will be the first preferred options for relocation of VM-1 and if that is not possible due to other factors (such as unavailability of processing and memory on RACK-4) Option5 will be considered for relocation followed by Option2.

Figure 8 is a block diagram illustrating a flow monitoring system according to further one aspect of the present invention.

The method and system, and the embodiments thereof, may be implemented in digital electronically circuitry, or in computer hardware, firmware, software, or in combinations of them. The flow monitoring system 200 may be implemented in a computer program product tangibly embodied in a machine readable storage device or computer readable means for execution by a programmable processor 300; and method steps S110, S120, S130 and S140 of the method may be performed by a programmable processor 300 executing a program of instructions or computer program code to perform functions of the method by operating on input data and generating output.

Thus, the method steps S110, S120, S130 and S140 of the method performed by a programmable processor 300 executing the program of instructions or computer program code are regarded as modules for or means for performing the functions of the method by operating on input data and generating output.

The method and system may advantageously be implemented in one or more computer programs that are executable on a programmable system including at least one programmable processor 300 coupled to receive data and instructions from, and to transmit data and instructions to, a data storage system 310, 230 and 240, at least one input device, and at least one output device. Each computer program may be implemented in a high-level procedural or object-oriented programming language, or in assembly or machine language if desired; and in any case, the language may be a compiled or interpreted language.

A computer program comprising computer program code which, when run in a processor 300 of a system 200, causes the system 200 to perform the method steps:

> S110: - collecting flow data for data packet flows between VMs in the datacentre;
> S120: - mapping flow data of data packet flows between VMs onto data centre topology to establish flow costs for said data packet flows;
> S130: - calculating an aggregated flow cost for all the flows associated with a VM for each VM within the data centre;
> S140: - determining whether to reschedule any VM, or not, based on the aggregated flow cost.

A computer program product comprising the computer program and a computer readable means, e.g. memory 310, on which the computer program comprising method steps S110, S120, S130 and S140 is stored.

Generally, a processor 300 will receive instructions and data from a memory 310, e.g. read-only memory and/or a random access memory. Storage devices and memories suitable for tangibly embodying computer program instructions and data include all forms of non-volatile memory, including by way of example semiconductor memory devices, such as EPROM, EEPROM, and flash memory devices; magnetic disks such internal hard disks and removable disks; magneto-optical disks; and CD-ROM disks. Any of the foregoing may be supplemented by, or incorporated in, specially - designed ASICs (Application Specific Integrated Circuits).

The processor 300 is capable of communicating via messages or signalling with the cloud manager 110 of the data centre 100.

The Flow Monitoring System 200 monitors data packet flows between Virtual Machines, VMs, 152 (see figure 2) within the physical resource layer 150 by collecting flow data for data packet flows between VMs in the data centre. The Flow Monitoring System 200 collects flow data information from all the virtual switches to which a VM 152 are connected. The design of this system is based on agent-server model. Flow Monitoring Agents, FMAs, 250 are deployed on all the physical machines 156, and the FMAs collect the network traffic information, i.e. flow data, from the virtual switches 154 and update the system. The flow data collected is the bandwidth usage statistics based on pairs of source and destination IP addresses. The statistical data collected by the FMAs 250 are sent to the system periodically. The system maintains a Flow Database, FD, 230 of all the flows. The processor 300 in the system updates the FD 230 as and when new statistics are sent to the FMS by the FMA 250. The flow data collected by the system can be used by any other service for various purposes. The system uses the Flow Database 230 updated by the FMS 210 to determine flows that are consuming significant bandwidth on the physical network resources. The Flow Monitoring System 200 is aware of the physical topology of the data centre 100 by means of Physical Topology information 240, i.e. information about the physical resources and the VMs in the physical resource layer 150. The system accesses the flow database to examine traffic flows that are consuming high bandwidth, and maps the flows on the physical resources 150 to determine expensive flows in the data centre.

A number of embodiments of the present invention have been described. It will be understood that various modifications may be made without departing from the scope of the following claims. Therefore, other implementations are within the scope of the following claims.

**Claims**

1. Method for monitoring data packet flows between Virtual Machines, VMs, and for reducing flow cost by migrating a VM within a data centre, said method comprises:

> - collecting flow data for data packet flows between VMs in the datacentre (S110);
> - mapping flow data of data packet flows between VMs onto data centre topology to establish flow costs for said data packet flows, $C_{fln} = N_s \times B_{fln}$, wherein $C_{fln}$ is flow cost for flow n between two VMs, where n= 1, 2, ..., N, if the VM is cooperating with N different VMs, $N_s$ = No. of switches between two VMs, $B_{fln}$ = flow bandwidth in Mbps for flow n between two VMs (S120);
> - calculating an aggregated flow cost for all the flows associated with a VM for each VM within the data centre (S130);
> - determining whether to reschedule by migrating any VM, or not, to another physical machine and/or physical resource based on the aggregated flow cost, *characterized in* that once an expensive flow is identified by means of a threshold measure ($t_{fl}$), all other flows associated with the two VMs that belong to the flow are also analysed to determine a revisited placement for the VM(s) so that a new aggregated cost of all the flows from the VMs are lower than the current aggregated cost of flows (S140).

2. The method according to claim 1, wherein the determining whether to reschedule any VM, or not, comprises:

> - For each optional location in the data centre, selecting a not tested optional location for VM, wherein an optional location of a VM is a physical machine where the VM is not located for the moment, but which is a possible location for the VM (S142).

3. The method according to claim 2, wherein the determining whether to reschedule any VM, or not, comprises:

   - Selecting the optional location of the VM which location provides the lowest aggregated flow cost (S146).

4. The method according to claim 1 or 3, wherein the determining whether to reschedule any VM, or not, comprises:

   - Rescheduling a VM in a pair of cooperating VMs according to a selected optional location based on the aggregated flow cost (S147).

5. The method according to claim 1, wherein the collecting of flow data comprising:

   - collecting flow statistics from one or more virtual switches regarding data packet flows handled by the one or more virtual switches (S115).

6. A flow monitoring system (200) for monitoring data packet flows between Virtual Machines, VMs, and for reducing flow cost by migrating a VM within a data centre, said flow monitoring system comprising a processor and a memory, said memory containing instructions executable by said processor, whereby said flow monitoring system is operative to collect flow data for data packet flows between VMs in the data centre, to map traffic data of data packet flows between VMs onto data centre topology to establish flow costs for said data packet flows, $C_{fln} = N_s \times B_{fln}$, wherein $C_{fln}$ is flow cost for flow n between two VMs, where n= 1, 2, ..., N, if the VM is cooperating with N different VMs, $N_s$ = No. of switches between two VMs, $B_{fln}$ = flow bandwidth in Mbps for flow n between two VMs, to calculate an aggregated flow cost for all the flows associated with a VM for each VM within the data centre, and to determine whether to reschedule by migrating any VM, or not, to another physical machine and/or physical resource based on the aggregated flow cost, *characterized in* that once an expensive flow is identified by means of a threshold measure ($t_{fl}$), all other flows associated with the two VMs that belong to the flow are also analysed to determine a revisited placement for the VM(s) so that a new aggregated cost of all the flows from the VMs are lower than the current aggregated cost of flows..

7. The system according to claim 6, wherein the flow monitoring system (200) is operative to select, for each optional location in the data centre, a not tested optional location for VM, wherein an optional location of a VM is a physical machine where the VM is not located for the moment, but which is a possible location for the VM.

8. The system according to claim 7, wherein the flow monitoring system (200) is operative to select the optional location of the VM which location provides the lowest aggregated flow cost.

9. The system according to claim 6 or 8, wherein the flow monitoring system (200) is operative to reschedule a VM in a pair of cooperating VMs according to a selected optional location based on the aggregated flow cost.

10. The system according to claim 6, wherein the flow monitoring system (200) is operative to collect flow statistics from one or more virtual switches regarding data packet flows handled by the one or more virtual switches.

11. A computer program comprising computer program code which, when run in a processor of a system, causes the system to perform the method steps of claim 1.

12. A computer program according to claim 11, further comprising computer program code which, when run in a processor of a system, causes the system to perform the method steps of independent claims 2 - 5.

13. A computer program product comprising a computer program according to claim 11 and a computer readable means on which the computer program is stored.

**Patentansprüche**

1. Verfahren zur Überwachung von Datenpaketströmen zwischen virtuellen Maschinen, VMs, und zur Verringerung von Strom-Kosten durch Migrieren einer VM in einer Datenzentrale, wobei das Verfahren umfasst:

   - Sammeln von Stromdaten für Datenpaketströme zwischen VMs in der Datenzentrale (S110);
   - Abbilden von Stromdaten von Datenpaketströmen zwischen VMs auf eine Datenzentralen-Topologie, um Strom-Kosten für die Datenpaketströme zu ermitteln, $C_{fln} = N_s \times B_{fln}$, wobei $C_{fln}$ Strom-Kosten für den Strom n zwischen zwei VMs sind, mit n = 1, 2, ..., N, wenn die VM mit N unterschiedlichen VMs zusammenarbeitet, $N_s$ = Anzahl von Switches zwischen zwei VMs ist, $B_{fln}$ = die Strombandbreite in Mbps für den Strom n zwischen zwei VMs ist (S120);

- Berechnen von aggregierten Strom-Kosten für alle Ströme, die einer VM zugeordnet sind, für jede VM innerhalb der Datenzentrale (S130);
- Bestimmen, ob irgendeine VM durch Migrieren auf eine andere physische Maschine und/oder physische Ressource neu geplant werden soll, oder nicht, basierend auf den aggregierten Strom-Kosten, **dadurch gekennzeichnet, dass**, sobald ein teurer Strom mittels eines Schwellenwertmaßes ($t_{fl}$) identifiziert wird, alle anderen Ströme, die den zwei VMs zugeordnet sind, die zu dem Strom gehören, ebenfalls analysiert werden, um eine überarbeitete Platzierung für die VM(s) zu bestimmen, so dass neue aggregierte Kosten aller Ströme von den VMs niedriger als die aktuellen aggregierten Kosten von Strömen sind (S140).

2. Verfahren nach Anspruch 1, wobei das Bestimmen, ob eine VM neu geplant werden soll oder nicht, umfasst:

    - für jeden optionalen Ort in der Datenzentrale, Auswählen eines nicht getesteten optionalen Orts für die VM, wobei ein optionaler Ort einer VM eine physische Maschine ist, auf der sich die VM momentan nicht befindet, die aber ein möglicher Ort für die VM (S142) ist.

3. Verfahren nach Anspruch 2, wobei das Bestimmen, ob eine VM neu geplant werden soll oder nicht, umfasst:

    - Auswählen des optionalen Orts der VM, welcher Ort die niedrigsten aggregierten Strom-Kosten (S146) bietet.

4. Verfahren nach Anspruch 1 oder 3, wobei das Bestimmen, ob eine VM neu geplant werden soll oder nicht, umfasst:

    - Neuplanen einer VM in einem Paar zusammenarbeitender VMs gemäß einem ausgewählten optionalen Ort basierend auf den aggregierten Strom-Kosten (S147).

5. Verfahren nach Anspruch 1, wobei das Sammeln von Strömungsdaten umfasst:

    - Sammeln von Stromstatistiken von einem oder mehreren virtuellen Switches in Bezug auf Datenpaketströme, die von dem einen oder den mehreren virtuellen Switches gehandhabt werden (S115).

6. Stromüberwachungssystem (200) zur Überwachung von Datenpaketströmen zwischen virtuellen Maschinen, VMs, und zur Verringerung von Strom-Kosten durch Migrieren einer VM in einer Datenzentrale, wobei das Stromüberwachungssystem einen Prozessor und einen Speicher umfasst, wobei der Speicher Anweisungen enthält, die durch den Prozessor ausgeführt werden können, wobei das Stromüberwachungssystem betreibbar ist, Stromdaten für Datenpaketströme zwischen VMs in der Datenzentrale zu sammeln, um Traffic-Daten von Datenpaketströmen zwischen VMs auf eine Datenzentralen-Topologie abzubilden, um Strom-Kosten für die Datenpaketströme zu ermitteln, $C_{fln} = N_s \times B_{fln}$, wobei $C_{fln}$ Strom-Kosten für den Strom n zwischen zwei VMs sind, mit n = 1, 2, ..., N, wenn die VM mit N unterschiedlichen VMs zusammenarbeitet, $N_s$ = Anzahl von Switches zwischen zwei VMs ist, $B_{fln}$ = die Strombandbreite in Mbps für den Strom n zwischen zwei VMs ist, um aggregierte Strom-Kosten für alle Ströme, die einer VM zugeordnet sind, zu berechnen, für alle VM in der Datenzentrale, und um zu bestimmen, ob irgendeine VM durch Migrieren auf eine andere physische Maschine und/oder physische Ressource neu geplant werden soll, oder nicht, basierend auf den aggregierten Strom-Kosten, **dadurch gekennzeichnet, dass**, sobald ein teurer Strom mittels eines Schwellenwertmaßes ($t_{fl}$) identifiziert wird, alle anderen Ströme, die den zwei VMs zugeordnet sind, die zu dem Strom gehören, ebenfalls analysiert werden, um eine überarbeitete Platzierung für die VM(s) zu bestimmen, so dass neue aggregierte Kosten aller Ströme von den VMs niedriger als die aktuellen aggregierten Kosten von Strömen sind.

7. System nach Anspruch 6, wobei das Stromüberwachungssystem (200) betreibbar ist, für jeden optionalen Ort in der Datenzentrale einen nicht getesteten optionalen Ort für die VM auszuwählen, wobei ein optionaler Ort einer VM eine physische Maschine ist, auf der sich die VM momentan nicht befindet, die aber ein möglicher Ort für die VM ist.

8. System nach Anspruch 7, wobei das Stromüberwachungssystem (200) betreibbar ist, den optionalen Ort der VM auszuwählen, welcher Ort die niedrigsten aggregierten Strom-Kosten bereitstellt.

9. System nach Anspruch 6 oder 8, wobei das Stromüberwachungssystem (200) betreibbar ist, eine VM in einem Paar zusammenarbeitender VMs entsprechend einem ausgewählten optionalen Ort basierend auf den aggregierten Strom-Kosten neu zu planen.

10. System nach Anspruch 6, wobei das Stromüberwachungssystem (200) betreibbar ist, Stromstatistiken von einem oder mehreren virtuellen Switches in Bezug auf Datenpaketströme zu sammeln, die von dem einen oder den mehreren virtuellen Switches gehandhabt werden.

11. Computerprogramm, das einen Computerprogrammcode umfasst, der, wenn er in einem Prozessor eines Systems ausgeführt wird, das System veranlasst, die Verfahrensschritte von Anspruch 1 auszuführen.

12. Computerprogramm nach Anspruch 11, das ferner einen Computerprogrammcode umfasst, der, wenn er in einem Prozessor eines Systems ausgeführt wird, das System veranlasst, die Verfahrensschritte der unabhängigen Ansprüche 2 bis 5 durchzuführen.

13. Computerprogrammprodukt, das ein Computerprogramm nach Anspruch 11 und computerlesbare Mittel, auf denen das Computerprogramm gespeichert ist, umfasst.

**Revendications**

1. Procédé pour surveiller des flux de paquets de données entre des machines virtuelles, VM, et pour réduire un coût de flux en faisant migrer une VM au sein d'un centre de données, ledit procédé comprend :

   - la collecte de données de flux pour des flux de paquets de données entre des VM dans le centre de données (S110) ;
   - le mappage de données de flux de flux de paquets de données entre des VM sur une topologie de centre de données pour établir des coûts de flux pour lesdits flux de paquets de données, $C_{fln} = N_s \times B_{fln}$, dans lequel $C_{fln}$ est un coût de flux pour un flux n entre deux VM, où n = 1, 2, ..., N, si la VM coopère avec N VM différentes, $N_s$ = Nombre de commutateurs entre deux VM, $B_{fln}$ = largeur de bande de flux en Mbps pour un flux n entre deux VM (S120) ;
   - le calcul d'un coût de flux agrégé pour tous les flux associés à une VM pour chaque VM au sein du centre de données (S130) ;
   - la détermination du fait qu'il faille reprogrammer ou non en faisant migrer une quelconque VM vers une autre machine physique et/ou ressource physique sur la base du coût de flux agrégé, **caractérisé en ce qu'**une fois qu'un flux coûteux est identifié au moyen d'une mesure de seuil ($t_{fl}$), tous les autres flux associés aux deux VM qui appartiennent au flux sont également analysés pour déterminer un placement revisité pour les VM de sorte qu'un nouveau coût agrégé de l'ensemble des flux provenant des VM est plus faible que le coût de flux agrégé courant (S140).

2. Procédé selon la revendication 1, dans lequel la détermination du fait qu'il faille reprogrammer ou non une quelconque VM comprend :

   - pour chaque emplacement optionnel dans le centre de données, la sélection d'un emplacement optionnel non testé pour VM, dans lequel un emplacement optionnel d'une VM est une machine physique où la VM ne se trouve pas pour le moment, mais qui est un emplacement possible pour la VM (S142).

3. Procédé selon la revendication 2, dans lequel la détermination du fait qu'il faille reprogrammer ou non une quelconque VM comprend :

   - la sélection de l'emplacement optionnel de la VM dont l'emplacement fournit le coût de flux agrégé le plus faible (S146).

4. Procédé selon la revendication 1 ou 3, dans lequel la détermination du fait qu'il faille reprogrammer ou non une quelconque VM comprend :

   - la reprogrammation d'une VM dans une paire de VM en coopération selon un emplacement optionnel sélectionné sur la base du coût de flux agrégé (S147).

5. Procédé selon la revendication 1, dans lequel la collecte de données de flux comprend :

   - la collecte de statistiques de flux à partir d'un ou plusieurs commutateurs virtuels concernant des flux de paquets de données gérés par les un ou plusieurs commutateurs virtuels (S115).

6. Système de surveillance de flux (200) pour surveiller des flux de paquets de données entre des machines virtuelles, VM, et pour réduire le coût de flux en faisant migrer une VM au sein d'un centre de données, ledit système de surveillance de flux comprenant un processeur et une mémoire, ladite mémoire contenant des instructions exécutables par ledit processeur, moyennant quoi ledit système de surveillance de flux est opérationnel pour collecter des données de flux pour des flux de paquets de données entre des VM dans le centre de données, pour mapper des données de trafic de flux de paquets de données entre des VM sur une topologie de centre de données pour établir des coûts de flux pour lesdits flux de paquets de données, $C_{fln} = N_s \times B_{fln}$, dans lequel $C_{fln}$ est un coût de flux pour un flux n entre deux VM, où n = 1, 2, ..., N, si la VM coopère avec N VM différentes, $N_s$ = Nombre de commutateurs entre deux VM, $B_{fln}$ = largeur de bande de flux en Mbps pour un flux n entre deux VM, pour calculer un coût de flux agrégé pour tous les flux associés à une VM pour chaque VM au sein du centre de données, et pour déterminer s'il faut reprogrammer ou non en faisant migrer une quelconque VM vers une autre machine physique et/ou ressource physique sur la base du coût de flux agrégé, **caractérisé en ce qu'**une fois qu'un flux coûteux est identifié au moyen d'une mesure de seuil ($t_{fl}$), tous les autres flux associés aux deux VM qui appartiennent au flux sont également analysés pour déterminer un placement revisité pour les VM de sorte qu'un nouveau coût agrégé de l'ensemble des flux provenant des VM est plus faible que le coût de flux agrégé courant.

7. Système selon la revendication 6, dans lequel le système de surveillance de flux (200) est opérationnel pour sélectionner, pour chaque emplacement optionnel dans le centre de données, un emplacement optionnel non testé pour VM, dans lequel un emplacement optionnel d'une VM est une machine physique où la VM ne se trouve pas pour le moment, mais qui est un emplacement possible pour la VM.

8. Système selon la revendication 7, dans lequel le système de surveillance de flux (200) est opérationnel pour sélectionner l'emplacement optionnel de la VM dont l'emplacement fournit le coût de flux agrégé le plus faible.

9. Système selon la revendication 6 ou 8, dans lequel le système de surveillance de flux (200) est opérationnel pour reprogrammer une VM dans une paire de VM en coopération selon un emplacement optionnel sélectionné sur la base du coût de flux agrégé.

10. Système selon la revendication 6, dans lequel le système de surveillance de flux (200) est opérationnel pour collecter des statistiques de flux à partir d'un ou plusieurs commutateurs virtuels concernant des flux de paquets de données gérés par les un ou plusieurs commutateurs virtuels.

11. Programme informatique comprenant un code de programme informatique qui, lorsqu'il est exécuté dans un processeur d'un système, amène le système à effectuer les étapes de procédé de la revendication 1.

12. Programme informatique selon la revendication 11, comprenant en outre un code de programme informatique qui, lorsqu'il est exécuté dans un processeur d'un système, amène le système à effectuer les étapes de procédé des revendications indépendantes 2 à 5.

13. Produit de programme informatique comprenant un programme informatique selon la revendication 11 et un moyen lisible par ordinateur sur lequel est stocké le programme informatique.

EP 3 053 041 B1

Fig. 1 Prior Art

Fig. 2

Fig. 3

S100

Collecting flow data for data packet
flows between VMs in the data centre — S110

Mapping flow data of data packet flows
between VMs onto data centre topology to
establish flow costs for said data packet flows — S120

Calculating an aggregated flow cost for all
the flows associated with a VM for each VM
within the data centre — S130

Determining whether to reschedule any VM, or not,
based on the aggregated flow cost — S140

Rescheduling a VM in a pair of cooperating VMs
according to a selected optional location based
on the aggregated flow cost — S147

Fig. 4

S140

S141

Each flow cost less than $T_{fl}$ ?

Yes → No rescheduling of VM

No

Selecting a not tested optional location for VM — S142

Mapping flow data of data packet flows between VMs onto data centre topology to establish flow costs for said data packet flows — S143

Calculating an aggregated flow cost for all the flows within the data centre — S144

All optional locations of the VM tested? — S145

No

Yes

Selecting the optional location of the VM which location provides lowest aggregated flow cost — S146

Rescheduling a VM in a pair of cooperating VMs according to a selected optional location based on the aggregated flow cost — S147

S110

Fig. 5

Fig. 6

Fig. 7

VM-X  152 (Current Location of the VM)

VM-X  152* (Possible locations to relocate the VM)

110

Cloud Manager

200

Memory

S110

S120

S130

S140

310

300

240

Processor

Physical Topology

Flow Database

FMA

FMA

FMA

250

250

250

230

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Implementing Scalable, Network-Aware Vitual Machine Migration for Cloud Data Centers. **TSO FUNG PO et al.** 2013 IEEE SIXTH INTERNATIONAL CONFERENCE ON CLOUD COMPUTING. IEEE, 28 June 2013, 557-564

- Application-aware virtual machine migration in data centers. **VIVEK SHRIVASTAVA et al.** INFOCOM, 2011 PROCEEDINGS IEEE. IEEE, 10 April 2011, 66-70
- **XIAOQIAO MENG et al.** *Improving the scalability of data center networks with traffic-aware virtual machine placement,* 14 March 2010, 1-9